# EUROPEAN PATENT APPLICATION

(11) **EP 1 870 606 A1**
(43) Date of publication of application: **26.12.2007**
(21) Application number: 07075371.0
(22) Date of filing: 15.05.2007
(51) Int. Cl.: F16C 19/38, F16C 19/56

(54) **Bearing and method whereby such a bearing can be applied**

(30) Priority: 13.06.2006 BE 200600323
(71) Applicant: HANSEN TRANSMISSIONS INTERNATIONAL NV, 2650 Edegem (BE)
(72) Inventor: Maes, Andy Marcel Georgette, B-9160 Eksaarde (BE)
(74) Representative: Donné, Eddy

(57) **Abstract**

Bearing (1), characterized in that it is composed of two bearings (2,3) which are configured such that the composed bearing (1) can be loaded in the radial direction and in both axial directions (AA'), whereby these two bearings (2,3) fit in an outer bush (4) which is provided with an axial stop (6).

## Description

The present invention concerns a bearing.

In particular, the present invention concerns what is called a "fixed" bearing, possibly better known as a "locating bearing", i.e. a bearing that can be used to radially support and axially position or lock a rotating part in both axial directions, for example a shaft, in relation to a stationary housing.

It is known to support a shaft in a housing by means of a pair of bearings, whereby the shaft is not only radially supported, but is also locked in both axial directions by preventing the movement of the shaft in relation to the housing in said axial directions.

In order to keep the production of the bearing housing as simple as possible, what is called a "cross-locating bearing arrangement" is very often used, whereby each bearing of the pair of bearings supports the shaft in the radial sense and a first bearing prevents a movement of the shaft in a first axial direction in relation to the housing, whereas the other bearing prevents a movement of the shaft in the other axial direction.

With such a "cross-locating bearing arrangement" the bearing housing is very easy to manufacture, as one only has to provide a bore hole on either side of the shaft in the housing, in which a bearing can each time be provided.

Besides, these bore holes can be made in a single continuous bore operation, as it is not necessary, for example, to provide a collar or the like in the bore holes for the axial support of the bearings.

The axial locking of the shaft in the housing can be obtained for example by preventing the bearings to move towards each other in an axial direction over the shaft by making the bearings rest on stops that are respectively provided on each far end of the shaft on the one hand, and by preventing the bearings to move away from each other in an axial direction by providing a lid in the above-mentioned bore holes in the bearing housing on the other hand, via which lids the bearings find support against the housing.

This "cross-locating bearing arrangement" is opted for less and less often, however, as an axial play has to be provided for in such an arrangement so as to allow for a thermal expansion of the shaft.

For this reason, a bearing arrangement whereby what is called a "locating" bearing is used on one far end of the shaft is chosen more and more often, which bearing supports the shaft in a radially rotating manner and prevents a movement of the shaft in both axial directions, whereas what is called a "non-locating" bearing is used on the other far end which also supports the shaft radially, but which allows the shaft to move unhindered in both axial directions.

This is called a "locating / non-locating bearing arrangement".

With such a "locating / non-locating" arrangement, the "locating" bearing must be locked in the housing, as well as laterally on the shaft.

On the shaft, this can be done for example by pushing the bearing over the shaft up against a stop which is provided on the shaft, after which the bearing can be fixed against said stop by means of a check nut.

The bearing is usually laterally locked in the housing in an analogous manner by pushing the bearing in a bore hole in the housing up against a stop or a collar provided in this bore hole, after which the bearing can be fixed by screwing a lid in the bore hole up against the bearing.

Another method consists in providing the bearing with a diameter which is somewhat larger than the diameter of the bore hole in which the bearing has to be provided; in strongly cooling the bearing until it has shrunk sufficiently to be provided in the bore hole and in raising the bearing's temperature again, such that it locks itself in the bore hole as a result of the thermal expansion.

Further, in case of a "locating / non-locating" arrangement, the "locating" bearing must be capable of carrying a load in the radial direction as well as in both axial directions.

Known suitable bearings are for example groove ball bearings, double-row swivel-joint roller bearings, double-row or meshing angular contact ball bearings or tapered roller bearings.

As a "locating" bearing can also be used a combination of a radial bearing which is merely suitable for absorbing purely radial loads, such as for example a cylinder bearing with a ring without any flanges, and a groove ball bearing, a four-point contact ball bearing or an axial bearing which can absorb loads in both axial directions.

A disadvantage of the known "locating" bearings, however, is that the mutual locking of the bearings in a housing is rather complicated.

For example, a method whereby the bearing is cooled so as to make it shrink requires special equipment.

In case use is made of an inner stop or collar in a bore hole on which the bearing can rest, the housing must be specially adapted to that end.

This requires more operations while manufacturing the housing, in any case more than one continuous drilling, which, as already mentioned, may suffice for the "cross-locating bearing arrangement".

A major additional disadvantage of the known "locating" bearings is that they are not fit to replace a "cross-locating bearing arrangement" in a simple manner in existing machines by a "locating / non-locating" bearing arrangement.

For, in such existing machines, the housing is usually provided with bore holes without a collar, such that it would require a lot of work to adjust the entire housing, or such that complicated methods will have to be revived again, such as the method whereby the bearing is cooled.

Also, the present invention aims to remedy one or several of the above-mentioned and other disadvantages.

The particular aim hereby is to design a bearing to be used on the "locating" side in a "locating / non-locating" bearing arrangement, whereby the composed bearing is such that it can be easily externally provided in a housing so as to replace a bearing in a "cross-locating bearing arrangement", without the housing having to be adjusted to that end or without complicated methods being required.

Moreover, the invention aims to design a bearing with restricted dimensions on the one hand, such that it can easily replace a bearing in a "cross-locating bearing arrangement", but with sufficient capacity on the other hand to absorb relatively heavy loads.

To this end, the present invention concerns a bearing that is composed of two bearings which are configured such that the composed bearing can be loaded in the radial and in both axial directions, whereby these two bearings fit in an inner bush which is provided with an axial stop.

A major advantage of such a bearing according to the invention is that the composed bearing is capable of absorbing radial forces as well as axial forces in both axial directions on the one hand, such that it can serve as the "locating" bearing in a "locating / non-locating" bearing arrangement, and that the two bearings of the bearing fit in a bush which is provided with an axial stop on the other hand, such that the bearing can be provided as such in the bore hole of a housing, for example in order to replace one of the bearings in a "cross-locating bearing arrangement".

Another advantage of such a bearing according to the invention is that two bearings are provided, as a result of which a good distribution of the load is obtained and relatively heavy loads can be absorbed.

According to a preferred embodiment of a bearing according to the invention, the inner or the outer races for the roller elements of the two bearings are provided on a single common inner or outer bearing ring.

This embodiment represents a first form of integration of the different parts of the bearing, which makes it possible to make the bearing more compact and which also strongly simplifies the assembly of the bearing.

According to another preferred embodiment of a bearing according to the invention, at least one of the outer races for the roller elements of the bearings is integrated in the outer bush.

This embodiment again represents a form of integration of the different parts of the bearing, which results in the same advantages.

The invention also concerns a method for transforming a bearing arrangement with a pair of bearings that are "mutually locked" into a "locating / non-locating" bearing arrangement, whereby this method consists in replacing a first bearing of the pair by a "non-locating" bearing which can only absorb a purely radial force and by replacing the second bearing of the pair by a "locating" bearing according to the invention, as described above.

According to a preferred method according to the invention, the original bearings are provided as such in a bore hole in the housing, and these bore holes are used to apply the new bearings.

In order to better explain the characteristics of the invention, the following preferred embodiments of a bearing according to the invention are given as an example only without being limitative in any way, with reference to the accompanying drawings, in which:
figure 1 schematically represents a first embodiment of a bearing according to the invention, as a section;
figure 2 illustrates the use of the bearing of figure 1; and,
figures 3 to 5, analogous to figure 1,
represent alternative embodiments for a bearing according to the invention.

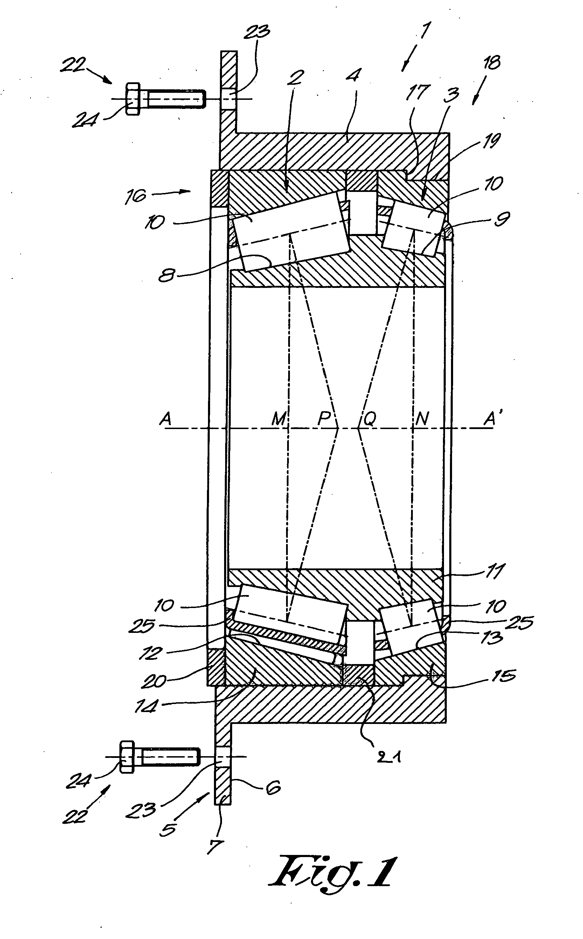

The bearing 1 according to the invention represented in figure 1 is composed of two bearings 2 and 3, in particular two tapered roller bearings 2 and 3, which fit in an outer bush 4 provided with an axial stop 6 on one far end 5.

By an axial stop 6 is meant that the stop 6 makes it possible to lock the bearing 1 in the axial direction AA' of the bearing 1 in a housing (not represented in figure 1) .

The axial stop 6 is formed of a radial, outward directed projection 7 on the outer bush 4.

The tapered roller bearings 2 and 3 are in this case arranged in what is called an X-arrangement, whereby the centers of pressure P and Q of the bearings 2 and 3 are situated between the geometric centers M and N of the bearings 2 and 3, but this is not necessary according to the invention.

Further, in the given example, the inner races 8 and 9 for the roller elements 10 of the two bearings 2 and 3 are provided on a single common inner bearing ring 11.

The outer races 12 and 13 for the roller elements 10 are provided on separate outer bearing rings 14 and 15.

For the axial locking of the bearings 2 and 3 in the outer bush 4, the bearing 1 is provided with locking means 16.

In the embodiment of figure 1, these locking means 16 consist of a radial, inwardly directed stop 17 provided on the other end 18 of the outer bush 4.

This stop 17 works in conjunction with a recess 19 provided in the outer bearing ring 15, and it makes sure that this outer bearing ring 15 cannot move in the axial direction AA', away from the other bearing 2.

Further, the locking means 16 consist of a check nut or locking ring 20 screwed in the outer bush 4 up against the bearing 2 at the far end 5.

In this manner is prevented that the bearings 2 and 3 move away from each other in the axial direction AA'.

Further, a spacer 21 is provided between both bearings 2 and 3 which prevents the bearings 2 and 3 from moving towards each other in the axial direction AA'.

The outer bush 4 is preferably provided with fixing means 22 for fixing the outer bush 4 to a housing.

In the given example, these fixing means 22 are formed of holes 23 in the axial stop 6 at the outer bush 4 and by bolts 24 which can be provided through the above-mentioned holes 23.

In the given example, the roller elements 10 are guided through a bearing cage 25.

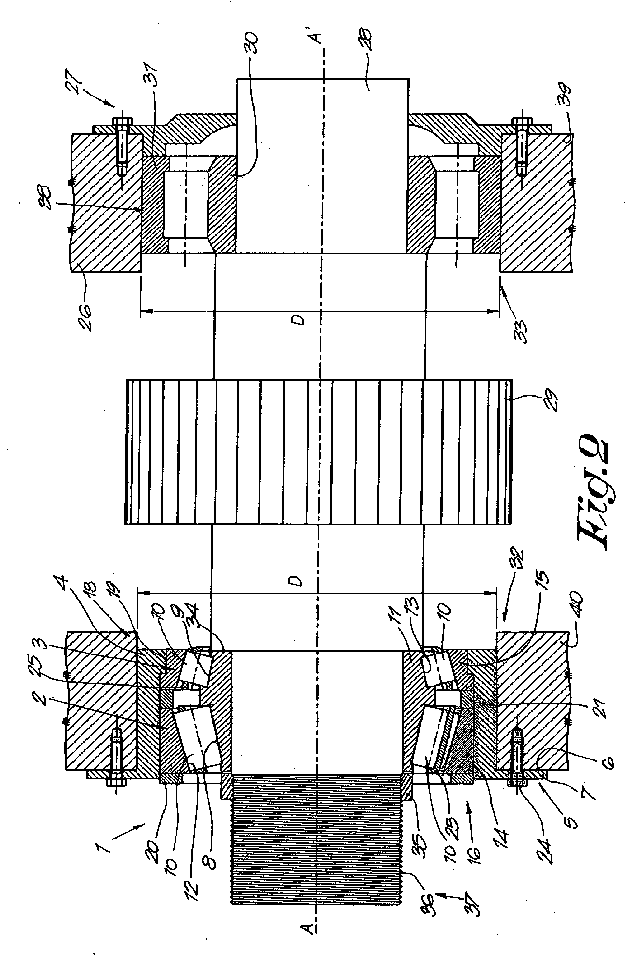

The use of such a bearing 1 according to the invention is simple and is described hereafter by means of figure 2.

In this figure 2, the bearing 1 is represented as mounted in the housing 26 of for example a gearbox to support a shaft 28 together with a second bearing 27, on which has been provided a gear wheel 29, for example.

The bearing arrangement of figure 2 is what is called a "locating / non-locating" bearing arrangement, whereby the bearing 1 fulfills the role of the "locating" bearing and the bearing 27 fulfills the role of the "non-locating" bearing.

In the given example, the "non-locating" bearing 27 is a cylindrical bearing 27 which can only absorb purely radial loads, as the inner bearing ring 30 of this bearing is not provided with flanges.

As a result, the inner bearing ring 30 can undergo small shifts in the axial direction AA' in relation to the outer bearing ring 31 without the good working order of the bearing 27 being hindered.

Naturally, also other sorts of bearings can be used for such a "non-locating" bearing 27.

Bore holes 32 and 33 are provided in the housing 26 to apply the bearings 1 and 27 which, in the given example, have the same diameter D.

In other words, such bore holes 32 and 33 can be made with a single bore operation.

The "locating" bearing 1 is laterally enclosed on the shaft 28 by means of a stop 34 on the shaft 28 against which the inner bearing ring 11 rests and a check nut or locking ring 35 which is screwed up against the bearing ring 11 over an outside thread 36 provided on the far end 37 of the shaft 28.

The outer bush 4 of the bearing 1 is pushed in the bore hole 32 during the assembly until it rests with its stop 6 against the housing 26, after which the bush 4 is screwed against the housing 26 by means of the bolts 24.

In this manner is also prevented a movement of the bearing 1 in the housing 26 in both axial directions AA'.

It is clear that in such a "locating / non-locating" bearing arrangement, the shaft 28 can undergo a thermal expansion without being hindered by the bearings 1 and 27, as the inner bearing ring 30 of the bearing 27 can axially shift over the roller elements 38 of the bearing 27.

It is also clear that the mounting of the bearing 1 in the housing is extremely simple and can also be applied with heavier loads.

Moreover, the bore hole 32 that has to be provided in the housing 26 for the bearing 1 is simply a round hole without any stop or the like, which makes such a bearing 1 very suitable to replace a "mutual locking" bearing arrangement in a simple manner by a "locating / non-locating" bearing arrangement, as in figure 2.

Consequently, the bearing 1 according to the invention can be used as a sort of replacement kit which can replace the existing conventional bearings, with all the advantages of the invention, without any additional manipulations being required.

Besides, such a bearing 1 according to the invention may also be useful when designing new machines.

For example, in some cases, the wall 39 of the housing 26 is only accessible via a bore hole 32 in the other wall 40.

Since in a "locating / non-locating" bearing arrangement, such as in the known applications realized by means of a known "locating" bearing, an inner stop is usually provided in the bore hole 32 in the wall 40, the diameter of a bore hole 33 in the wall 39 is restricted by said stop.

By making use of a bearing 1 according to the invention, such a stop in the bore hole 32 is no longer required, and a larger bore hole 33 can thus be provided in the other wall 39 in such a situation.

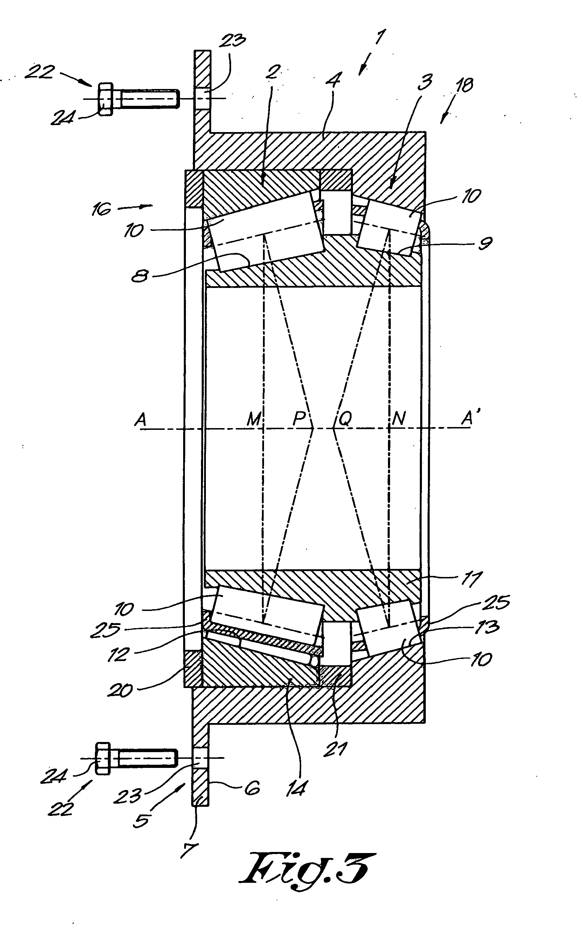

Figure 3 represents another embodiment of a bearing 1 according to the invention, whereby the outer race 13 for the roller elements 10 of the bearing 3 is integrated in the outer bush 4, as a result of which the bearing 1 can be made more compact and the assembly of the bearing 1 is simplified.

Naturally, the use of the bearing 1 is not fundamentally altered.

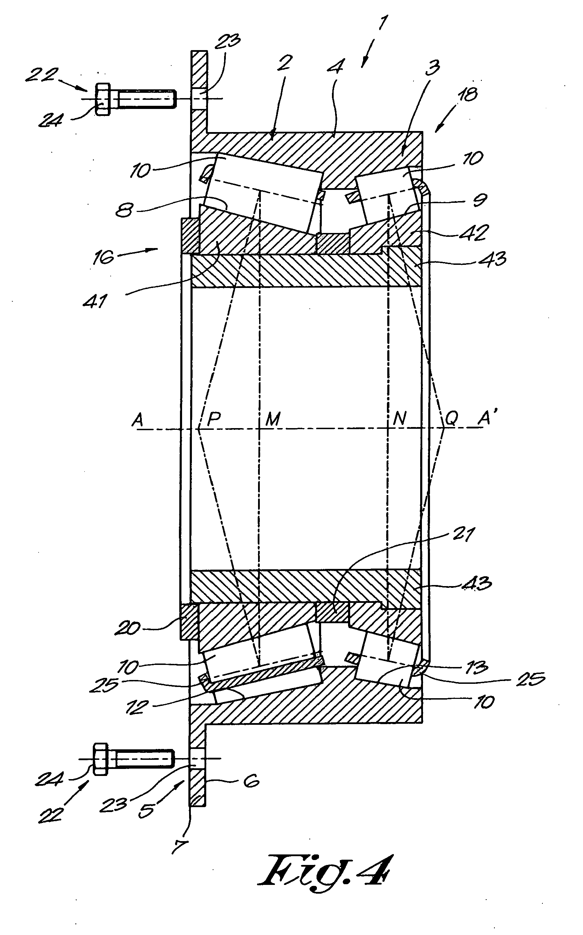

In the embodiment of a bearing 1 according to the invention which is represented in figure 4, both outer races 12 and 13 for the roller elements 10 are integrated in the outer bush 4.

In view of the assembly, the inner races 8 and 9 for the roller elements 10 of the two bearings 2 and 3 are no longer provided on a single inner bearing ring 11, as in the preceding embodiments, but on separate inner bearing rings 41 and 42.

In principle, these inner bearing rings can be provided directly on a shaft 28, but in the given embodiment is provided an inner bush 43 to that end over which the inner bearing rings 41 and 42 have been pushed, such that the bearing 1 can be more easily provided as a whole over the shaft 28.

It should be noted that in this embodiment, the tapered roller bearings 2 and 3 are mounted in an O-arrangement, whereby the centers of pressure P and Q of the bearings 2 and 3 are situated outside the geometric centers M and N of the bearings 2 and 3.

Further, the working of the bearing 1 according to this embodiment is obvious and entirely analogous to the preceding embodiments.

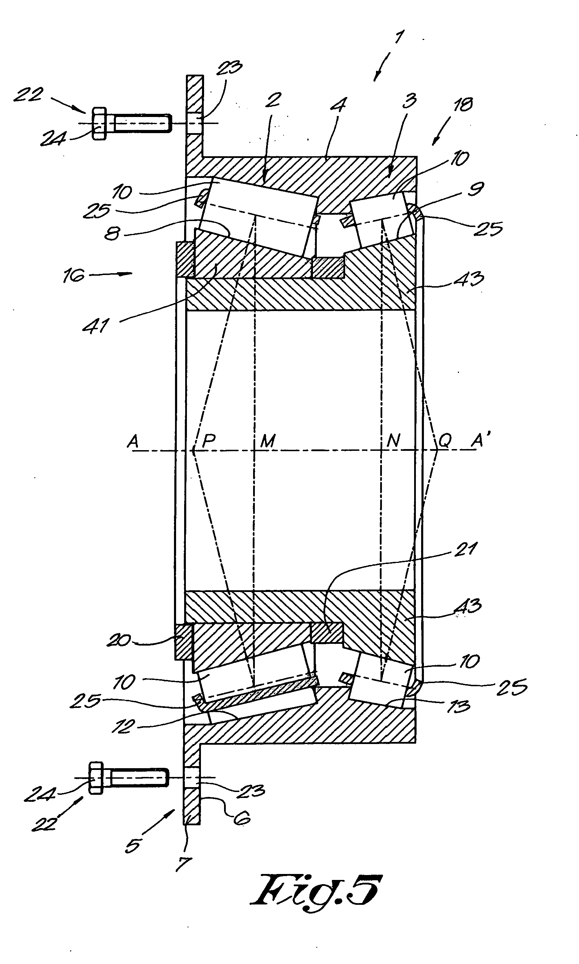

Figure 5 represents a last embodiment of a bearing 1 according to the invention which strongly resembles that of figure 4, but whereby the race 9 of the inner bearing ring 42 is integrated in the inner bush 43.

Also the use of this embodiment is entirely analogous to that of the preceding embodiments.

Naturally, many other embodiments are possible according to the invention as well.

For example, it is not necessary to design the stop 6 at the bush 4 as a projection 7, for such a stop 6 could just as well be a lip or the like with which the bearing can be fixed to the housing 26.

The present invention is by no means limited to the embodiments given as an example and represented in the accompanying drawings; on the contrary, such a bearing according to the invention can be made in different shapes and dimensions while still remaining within the scope of the invention.

Also, according to the invention, many alternatives are possible for the above-described method for transforming a bearing arrangement with a pair of "mutually locked" bearings into a "locating / non-locating" bearing arrangement.

## Claims

1. Bearing (1), **characterized in that** it is composed of two bearings (2,3) which are configured such that the composed bearing (1) can be loaded in the radial direction and in both axial directions (AA'), whereby these two bearings (2,3) fit in an outer bush (4) which is provided with an axial stop (6).

2. Bearing according to claim 1, **characterized in that** the inner races (8,9) or the outer races (12,13) for the roller elements (10) of the two bearings (2,3) are provided on a single common inner bearing ring (11) or outer bearing ring (4).

3. Bearing according to claim 1 or 2, **characterized in that** at least one of the outer races (12,13) for the roller elements (10) of the bearings (2,3) is integrated in the outer bush (4).

4. Bearing according to claim 3, **characterized in that** both outer races (12,13) for the roller elements (10) are integrated in the outer bush (4).

5. Bearing according to any one of the preceding claims, **characterized in that** at least one of the inner bearing rings (47,48) is provided over an inner bush (43).

6. Bearing according to claim 5, **characterized in that** one of the races (9) of the inner bearing rings (41,42) is integrated in the inner bush (43).

7. Bearing according to any one of the preceding claims, **characterized in that** locking means (16) are provided to axially lock the bearings (2,3) in relation to the inner bush (43) or the outer bush (4).

8. Bearing according to claim 7, **characterized in that** the locking means (16) comprise at least a stop (17) which is provided on the inner bush (43) or the outer bush (4).

9. Bearing according to claim 7, **characterized in that** the locking means comprise at least a check nut or locking ring (20).

10. Bearing according to any one of the preceding claims, **characterized in that** the two bearings (2,3) are tapered roller bearings.

11. Bearing according to any one of the preceding claims, **characterized in that** between the two bearings (2,3) is provided at least one spacer (21).

12. Bearing according to any one of the preceding claims, **characterized in that** the axial stop (6) on the outer bush (4) is a projection (7).

13. Bearing according to any one of the preceding claims, **characterized in that** the outer bush is provided with fixing means (22) for fixing the outer bush (4) to a housing (26).

14. Bearing according to claim 14, **characterized in that** the fixing means (22) are formed of holes (23) in the axial stop (6) on the outer bush (4) and by bolts or screws (24) which can be provided through the above-mentioned holes (23).

15. Method for transforming a bearing arrangement with a pair of "mutually locked" bearings into a "locating / non-locating" bearing arrangement, **characterized in that** it consists in replacing a first bearing of the pair by a "non-locating" bearing (27) which can only absorb a purely radial force and by replacing the second bearing of the pair by a "locating" bearing (1) which is in conformity with one of the preceding claims.

16. Method according to claim 16, **characterized in that** the original bearings are provided in a bore hole (32,33) in the housing and **in that** the same bore holes (32,33) are used for applying the new bearings (1,27).
